# FASCICULE DE BREVET EUROPEEN

(11) **EP 1 969 534 B1**
(45) Date de publication et mention de la délivrance du brevet: **17.08.2011**
(21) Numéro de dépôt: 06847209.1
(22) Date de dépôt: 22.12.2006
(51) Int. Cl.: G06K 19/073

(54) **STRUCTURE DE PROTECTION POUR UN ARTICLE, NOTAMMENT UN DOCUMENT**
SCHUTZSTRUKTUR FÜR EINEN ARTIKEL, INSBESONDERE EIN DOKUMENT
ARTICLE, IN PARTICULAR A DOCUMENT, PROTECTIVE STRUCTURE

(30) Priorité: 22.12.2005 FR 0554041
(43) Date de publication de la demande: 17.09.2008
(73) Titulaire: ARJOWIGGINS SECURITY, 75009 Paris (FR)
(72) Inventeur: RANCIEN, Sandrine, 38140 La Murette (FR); MARLIN, Pascal, 77120 Coulommiers (FR)
(74) Mandataire: Leszczynski, André
(86) Numéro de dépôt international: PCT/FR2006/051420
(87) Numéro de publication internationale: WO 2007/074309

(56) Documents cités:
- DE-A1-102004 019 132
- DE-B3-102004 041 397
- FR-A- 2 863 748
- US-A1- 2003 057 131
- PATENT ABSTRACTS OF JAPAN vol. 2000, no. 03, 30 mars 2000 (2000-03-30) & JP 11 348471 A (KONICA CORP), 21 décembre 1999 (1999-12-21)
- PATENT ABSTRACTS OF JAPAN vol. 2003, no. 12, 5 décembre 2003 (2003-12-05) -& JP 2003 300579 A (MATSUSHITA ELECTRIC IND CO LTD), 21 octobre 2003 (2003-10-21)
- PATENT ABSTRACTS OF JAPAN vol. 1999, no. 02, 26 février 1999 (1999-02-26) -& JP 10 294586 A (DAINIPPON PRINTING CO LTD), 4 novembre 1998 (1998-11-04)
- PATENT ABSTRACTS OF JAPAN vol. 1998, no. 02, 30 janvier 1998 (1998-01-30) -& JP 09 269985 A (TOSHIBA CORP), 14 octobre 1997 (1997-10-14)
- PATENT ABSTRACTS OF JAPAN vol. 2003, no. 12, 5 décembre 2003 (2003-12-05) -& JP 2005 301420 A (OLYMPUS CORP), 27 octobre 2005 (2005-10-27)
- PATENT ABSTRACTS OF JAPAN vol. 1999, no. 05, 31 mai 1999 (1999-05-31) -& JP 11 048662 A (DENSO CORP), 23 février 1999 (1999-02-23)

## Description

La présente invention a notamment pour objet une structure de protection pour un article, notamment un document.

D'une manière générale, il existe un besoin pour protéger un article comportant un dispositif électronique permettant d'échanger sans contact des données par voie électromagnétique, notamment du type dispositif RFID (Radio Frequency Identification Device), contre une tentative de lecture et/ou écriture des données à l'insu du porteur de l'article, à l'aide d'un lecteur suffisamment puissant.

Un accès frauduleux aux données du dispositif électronique peut permettre par exemple de contrôler illégalement l'identité d'une personne, d'accéder à distance à des données personnelles pour une utilisation frauduleuse, de suivre les mouvements d'une personne, ou d'établir une liste des goûts et habitudes pour réaliser un profil d'une personne.

Par ailleurs, un certain nombre de pays ont adopté le passeport dit « biométrique » comportant un dispositif électronique à puce mémorisant une photographie de la personne et son empreinte digitale.

On connaît par la demande de brevet FR 2 863 748 un passeport comportant, sur un premier des volets de la couverture, un transpondeur formé d'un module électronique connecté à une antenne. Un deuxième volet de la couverture ou l'un des feuillets du livret est pourvu d'un élément de masquage passif de l'antenne du transpondeur, destiné à perturber la lecture sans contact des données mémorisées par le module électronique. L'élément de masquage défini par une feuille d'aluminium recouvre au moins partiellement l'antenne du transpondeur lorsque le livret de passeport est fermé. L'élément de masquage peut être formé par une étiquette collée sur la couverture ou un feuillet du passeport. Cette demande de brevet FR 2 863 748 décrit également un étui de protection destiné à recevoir une carte à puce, cet étui comportant deux volets rabattables l'un sur l'autre. L'un de ces volets comporte un élément de masquage permettant de rendre impossible la lecture de la carte lorsque les volets de l'étui sont rabattus l'un sur l'autre.

La demande internationale WO 2005/119586 divulgue un document de sécurité comportant un transpondeur et un écran empêchant la lecture à distance d'informations protégées lorsque le document de sécurité est fermé.

La demande de brevet US 2005/0 274 794 décrit un support pour des documents de sécurité comportant un écran électromagnétique empêchant la lecture non autorisée d'informations à protéger.

La demande de brevet JP 2005/30142 divulgue un étui pour passeport comportant une puce de type RFID et deux boucliers électromagnétiques.

La demande internationale WO 2005/062246 décrit un passeport dont la couverture comporte un écran électromagnétique qui empêche, lorsque le passeport est fermé, la lecture d'informations à protéger.

La demande de brevet JP 2004-188215 décrit un étui comportant, d'une part, un support pour recevoir une carte à puce et, d'autre part, un rabat pouvant être refermé sur le support. Le support et le rabat définissent un écran empêchant la lecture sans contact de données contenues sur la carte à puce.

La demande de brevet JP 11-348471 décrit un livret comportant un module électronique porté par l'un des volets de la couverture ou l'un des feuillets du livret. Le volet avant de la couverture du livret peut définir un écran électromagnétique et le module électronique être porté par le volet arrière. Dans ce cas, la lecture du module électronique est possible lorsque le livret est ouvert. La couverture ainsi réalisée présente des volets avant et arrière dissymétriques, du fait des différences d'épaisseur et de composition, ce qui peut rendre la fabrication du livret relativement complexe et coûteuse et nuire à son esthétique. Dans une variante, l'écran électromagnétique est formé à la fois sur les volets avant et arrière et le module électronique est porté par un feuillet du livret. Afin de lire la puce, il faut plier vers l'arrière les volets de la couverture, ce qui peut à la longue endommager la charnière reliant les volets avant et arrière de la couverture. Enfin la structure relativement complexe de la couverture formant l'écran électromagnétique peut affecter la durabilité du livret.

La demande FR 2 663 445 décrit une carte électronique comportant un circuit électronique porté par une plaquette disposée dans un boîtier généralement plat. Deux couches conductrices sont collées à l'extérieur du boîtier, lesquelles couches peuvent présenter une épaisseur de l'ordre d'un centième de millimètre et servent à protéger le circuit électronique contre des perturbations dues aux décharges électrostatiques. Des feuilles de protection sont ensuite collées sur les couches conductrices.

L'invention vise notamment à rendre plus simple la protection d'un article comportant un dispositif électronique contre une tentative frauduleuse de lecture et/ou écriture de données mémorisées sur le dispositif électronique.

L'invention a ainsi pour objet, selon l'un de ses aspects, une structure selon la revendication 1.

L'invention permet de protéger de manière relativement simple le dispositif électronique contre une tentative de lecture et/ou écriture frauduleuse de données grâce à l'écran électromagnétique, notamment sans avoir à apporter de modifications à l'article à protéger.

Par exemple, la structure de protection selon l'invention peut être réalisée séparément de l'article à protéger, lequel peut conserver son aspect et/ou ses caractéristiques physiques ou mécaniques d'origine.

Du fait que la structure de protection est mise en place de manière amovible sur l'article, lorsque la structure de protection est endommagée lors de l'utilisation, celle-ci peut être remplacée aisément par une nouvelle structure.

Par ailleurs, la structure de protection peut être agencée pour protéger l'article sur lequel elle est mise en place, par exemple contre des agressions mécaniques, ce qui peut permettre d'accroître la durabilité de l'article.

La structure de protection peut ainsi être agencée pour recouvrir au moins partiellement une face extérieure de l'article lorsque la structure est mise en place sur l'article.

La structure de protection selon l'invention comporte une portion définissant l'écran électromagnétique, cette portion étant sensiblement transparente. On entend par « portion sensiblement transparente » une portion préservant la visibilité d'informations figurant sur une face extérieure de l'article à travers la structure de protection, lorsque cette structure de protection est mise en place sur l'article à protéger.

Ceci peut s'avérer avantageux sur le plan esthétique, notamment lorsque l'article à protéger est un passeport sur la couverture duquel des symboles dorés sont réalisés contribuant à l'image de marque du pays.

La portion sensiblement transparente peut présenter un coefficient de transmission de la lumière supérieur à 0,5, notamment 0,7, étant par exemple voisin de 0,8, pour la lumière du jour.

La structure de protection peut comporter par exemple un support en matière plastique, en particulier transparente, notamment en polyester.

La structure de protection peut comporter, le cas échéant, au moins une zone semi-réfléchissante.

Dans un exemple de mise en oeuvre de l'invention, la structure comporte au moins deux volets reliés par la zone de pliage.

L'un au moins des volets de la structure de protection peut comporter au moins une portion principale et un rabat pour former l'élément de maintien permettant l'insertion d'au moins une portion d'un volet de l'article entre ladite portion principale et ledit rabat.

Le rabat peut comporter par exemple au moins deux bords opposés, notamment sensiblement parallèles, fixés à la portion principale du volet.

Préalablement à la lecture et/ou écriture sans contact de données sur le dispositif électronique à l'aide d'un dispositif extérieur de lecture et/ou écriture, la structure de protection peut être séparée de l'article.

Après l'opération de lecture et/ou écriture, la structure de protection est remise en place sur l'article.

En variante, le rabat est relié à ladite portion principale du volet de manière à permettre le pliage et le dépliage du rabat par rapport à la portion principale.

Dans un autre exemple de mise en oeuvre de l'invention, l'élément de maintien comporte au moins un élément rapporté sur un volet de la structure de protection.

L'élément de maintien comporte par exemple au moins un organe élastique agencé pour maintenir un volet de l'article contre un volet de la structure de protection, l'organe élastique présentant par exemple une forme en bande.

Dans un exemple de mise en oeuvre de l'invention, l'écran électromagnétique s'étend sur toute la surface de la structure de protection.

Dans ce cas, lorsque le dispositif électronique est porté par l'un des volets de l'article à protéger, la structure de protection est séparée de l'article au moment de la lecture et/ou écriture de données sur le dispositif électronique.

Dans un autre exemple de mise en oeuvre de l'invention, l'écran électromagnétique s'étend sur une portion seulement de la surface de la structure de protection.

Lorsque l'un au moins des volets de la structure de protection comporte une portion principale destinée à recouvrir au moins partiellement une face extérieure du volet correspondant de l'article, l'écran électromagnétique peut s'étendre par exemple au moins sur cette portion principale de la structure de protection, notamment seulement sur cette portion principale.

Ainsi, il est possible de laisser la structure de protection sur l'article à protéger, au moment de la lecture des données du dispositif électronique, lorsque le dispositif électronique est porté par un volet de l'article différent de celui recouvert par l'écran électromagnétique.

En ouvrant les volets de l'article, l'écran électromagnétique s'éloigne suffisamment du dispositif électronique de manière à ne pas perturber la lecture et/ou écriture des données.

Si on le souhaite, l'écran électromagnétique peut s'étendre sur au moins le rabat dépliable précité, notamment seulement sur ce rabat.

Ainsi, le dispositif électronique peut être porté par un volet de l'article à protéger, pouvant être pris en sandwich entre la portion principale et le rabat définissant l'écran électromagnétique de la structure de protection, ce qui permet de protéger le dispositif électronique contre une lecture et/ou écriture frauduleuse.

Le dispositif électronique peut être porté par la partie d'un volet de l'article à protéger située à proximité de la zone de pliage ou par la partie d'un volet de l'article à protéger opposée à la zone de pliage.

En dépliant le rabat définissant l'écran électromagnétique pour l'éloigner suffisamment du dispositif électronique, il est possible de procéder à une lecture et/ou écriture de données sur le dispositif électronique, sans avoir à séparer complètement la structure de protection de l'article.

Si on le souhaite, la structure de protection peut comporter deux rabats dépliables reliés chacun à une portion principale des deux volets de la structure. L'écran électromagnétique est notamment formé sur ces deux rabats dépliables, permettant par exemple de protéger un dispositif électronique porté par un feuillet du livret, lorsque ce livret est fermé. Le dispositif électronique est alors pris en sandwich entre les deux rabats dépliables définissant l'écran électromagnétique.

La structure de protection peut comporter, le cas échéant, sur l'un au moins des volets, un rabat de maintien de l'article, ayant notamment deux bords opposés fixés à la portion principale du volet, et un rabat dépliable, notamment de superficie plus grande que celle du rabat de maintien, l'écran électromagnétique étant formé au moins sur le rabat dépliable.

Le cas échéant, l'écran électromagnétique peut s'étendre à la fois sur la portion principale et le rabat d'un volet de la structure de protection.

La structure de protection peut comporter au moins trois volets, par exemple quatre volets, reliés deux à deux par une zone de pliage.

Dans un exemple de mise en oeuvre de l'invention, l'écran électromagnétique peut être formé par un matériau électriquement conducteur et/ou magnétique noyé dans toute la masse du support.

En variante, l'écran électromagnétique est formé par un matériau électriquement conducteur et/ou magnétique déposé sur une face du support.

En variante encore, l'écran électromagnétique est formé par un matériau électriquement conducteur et/ou magnétique définissant une âme du support.

L'écran électromagnétique peut présenter des formes et/ou dimensions variées, adaptées pour perturber la lecture et/ou l'écriture sans contact lorsque l'écran électromagnétique est suffisamment proche du dispositif électronique.

Par exemple, l'écran électromagnétique peut présenter un contour rectangulaire, carré, courbe, par exemple circulaire ou elliptique. L'écran électromagnétique peut former un motif plein. En variante, l'écran se présente sous la forme d'une bande se refermant sur elle-même, cette bande étant par exemple sensiblement rectangulaire ou circulaire. L'écran électromagnétique peut présenter par exemple un motif en grille, si on le souhaite.

L'écran électromagnétique peut définir au moins un motif contribuant à l'esthétique de la structure, ce motif pouvant être par exemple un caractère alphanumérique, un symbole, un logo ou un dessin.

L'écran électromagnétique peut être formé à l'aidé de l'un au moins des éléments suivants :
- un support, notamment un film, en matière plastique laminé ou contrecollé avec au moins un film métallique, par exemple un film en aluminium ou en cuivre,
- un support métallisé, notamment par métallisation sous vide ou par traitement chimique, le support pouvant être choisi parmi : un film en matière plastique, un papier, un textile, un non-tissé,
- un support, notamment en papier ou en matière plastique, chargé avec une charge électriquement conductrice telle que du noir de carbone ou des fibres de carbone, des fibres métalliques, des fibres métallisées, des paillettes métalliques, une poudre métallique, ou avec un agent conducteur tel que le sel,
- un support à fils entrecroisés, notamment un tissé, un tricot, une grille, une partie au moins des fils étant en matériau électriquement conducteur, étant par exemple en métal,
- un support non-tissé comportant des fibres conductrices, par exemple des fibres métalliques, éventuellement mélangées à des fibres synthétiques,
- un support, notamment un film, présentant une structure ajourée en métal,
- un film métallique,
- un vernis ou une peinture électriquement conducteur, par exemple à base de cuivre, de nickel ou d'argent,
- un polymère électriquement conducteur tel que le polypyrrole, le polyacéthylène et le polythiophène,
- un adhésif électriquement conducteur.

L'écran électromagnétique peut également être formé à l'aide de l'un au moins des éléments suivants :
- un support, notamment un film, en matière plastique laminé ou contrecollé avec au moins un film magnétique,
- un support avec un revêtement magnétique, déposé par exemple sous vide ou par traitement chimique,
- un support, notamment en papier ou en matière plastique, chargé avec une charge magnétique telle que des ferrites,
- un support, notamment un film, présentant une structure ajourée en matériau magnétique,
- un film magnétique,
- un vernis ou une peinture magnétique,
- un adhésif comportant des particules magnétiques.

L'écran électromagnétique peut être formé par des nanotubes de carbone ou des nanoparticules magnétiques par exemple.

La structure de protection peut comporter, si on le souhaite, au moins une zone imprimée, un motif transféré, par exemple par application de pression et/ou de chaleur, une dorure, ou une étiquette, notamment collée sur une face de la structure.

La structure selon l'invention peut être agencée pour pouvoir être mise en place sur un document, notamment de sécurité et/ou de valeur, tel qu'un passeport.

L'invention a encore pour objet, selon l'un de ses aspects, un ensemble comportant :
- un article, notamment un document,
- une structure de protection définie ci-dessus, mise en place de manière amovible sur ledit article.

L'article peut comporter un livret, notamment un livret de passeport, comprenant une couverture présentant deux volets.

L'élément de maintien de la structure de protection peut être agencé pour maintenir à la fois l'un des volets de la couverture et un ou plusieurs feuillets du livret.

Le dispositif électronique peut être porté par exemple par un volet de la couverture du livret ou un feuillet de ce livret.

L'article peut comporter au moins trois volets reliés deux à deux par une zone de pliage.

L'invention a encore pour objet, selon un autre de ses aspects, un procédé pour protéger un article, notamment un document, d'un ensemble défini ci-dessus, contre une tentative de lecture et/ou écriture sans contact de données sur le dispositif électronique, le procédé comportant l'étape suivante :
- mettre en place de manière amovible la structure de protection sur l'article.

L'invention a encore pour objet, selon un autre de ses aspects, un procédé de lecture et/ou écriture sans contact de données sur le dispositif électronique d'un article d'un ensemble défini ci-dessus, le procédé comportant les étapes suivantes :
- éloigner suffisamment l'écran électromagnétique du dispositif électronique afin de ne pas perturber la lecture et/ou l'écriture sans contact de données du dispositif électronique, notamment par couplage électromagnétique,
- lire des données du dispositif électronique et/ou écrire des données sur le dispositif électronique.

Le procédé peut comporter l'étape suivante :
- séparer complètement la structure de protection de l'article.

En variante, le procédé peut comporter l'étape suivante :
- éloigner l'écran électromagnétique du dispositif électronique sans séparer complètement la structure de protection de l'article, par exemple en dépliant un rabat de la structure de protection et/ou en disposant l'article dans une configuration donnée.

L'invention a encore pour objet, selon un autre de ses aspects, un ensemble comportant :
- un article comportant au moins un dispositif électronique permettant d'échanger des données par voie électromagnétique, ou au moins un compartiment agencé pour recevoir au moins un élément comportant un tel dispositif,
- une structure de protection agencée pour pouvoir prendre au moins une configuration dans laquelle la structure est mise en place sur l'article et l'écran électromagnétique s'oppose à une lecture et/ou écriture de données du dispositif électronique, la structure comportant notamment au moins une portion sensiblement transparente définissant au moins partiellement l'écran électromagnétique de manière à ce que des informations figurant sur l'article soient visibles à travers cette portion sensiblement transparente de la structure de protection.

L'article à protéger peut être choisi parmi l'un au moins des éléments suivants : une carte d'identité, un visa, un permis de conduire, cette liste n'étant pas limitative.

En variante, l'article peut être par exemple un étui comportant un ou plusieurs compartiments agencés pour recevoir un élément comportant un dispositif électronique, cet élément étant par exemple une carte à puce.

L'étui peut comporter des volets extérieurs sensiblement rigides, le cas échéant.

L'article peut encore être un bagage telle qu'une mallette.

L'invention a encore pour objet, selon un autre de ses aspects, une structure de protection pour un article tel qu'un document, l'article comportant :
- au moins deux volets reliés par une zone de pliage,
- au moins un dispositif électronique permettant d'échanger des données sans contact, ou au moins un compartiment agencé pour recevoir au moins un élément comportant un tel dispositif électronique,
   la structure de protection étant fixée à demeure sur l'article et comportant :
- au moins une zone de pliage permettant à la structure d'accompagner le pliage de l'article, et
- au moins un écran électromagnétique,
   la structure étant agencée pour pouvoir prendre au moins une configuration dans laquelle l'écran électromagnétique s'oppose à une lecture et/ou écriture sans contact du dispositif électronique.

La présente invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, un passeport,
- la figure 2 représente, schématiquement et partiellement, en coupe transversale, une structure de protection conforme à l'invention, mise en place sur le passeport de la figure 1,
- la figure 3 illustre, schématiquement et partiellement, de manière isolée, la structure de protection de la figure 2,
- les figures 4 à 13 illustrent, schématiquement et partiellement, différents exemples de structures de protection conformes à l'invention, pour protéger le passeport de la figure 1,
- la figure 14 représente, schématiquement et partiellement, en coupe transversale, un article comportant trois volets protégés par une structure de protection conforme à l'invention,
- les figures 15 à 19 représentent, schématiquement et partiellement, différents exemples d'articles comportant trois ou quatre volets, pliés de différentes manières,
- les figures 20 et 21 représentent, schématiquement et partiellement, des structures de protection conformes à d'autres exemples de mise en oeuvre de l'invention,
- les figures 22 et 23 représentent, schématiquement et partiellement, des articles protégés par une structure de protection fixée à demeure sur l'article,
- la figure 24 représente, schématiquement et partiellement, en perspective, un étui agencé pour recevoir des cartes à puce, et
- la figure 25 représente, schématiquement et partiellement, en coupe transversale, l'étui de la figure 24, portant une pluralité de cartes à puce.

Sur le dessin, dans un souci de clarté, les proportions relatives des différents éléments représentés n'ont pas toujours été respectées, les vues étant schématiques.

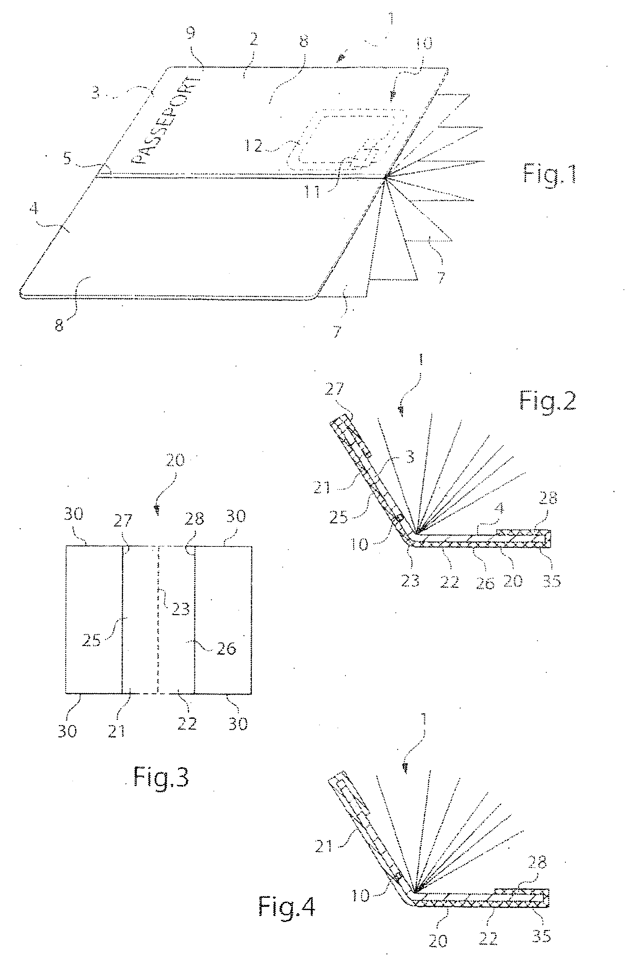

On a représenté sur la figure 1 un passeport 1 comportant une couverture 2 formée par deux volets avant 3 et arrière 4 reliés entre eux par une zone de pliage 5 définissant une charnière.

Le passeport 1 comprend un livret comportant une pluralité de feuillets 7 définissant des pages du passeport 1.

Dans l'exemple considéré, le volet avant 3 porte un dispositif électronique 10 de type RFID, comportant une puce électronique 11 connectée à une antenne 12.

Le dispositif électronique 10 permet d'échanger des données sans contact par voie électromagnétique, en vue d'une lecture et/ou écriture sur le dispositif électronique 10 à l'aide d'un dispositif extérieur.

Le dispositif électronique 10 est notamment incorporé dans l'épaisseur du volet avant 3, comme cela est décrit par exemple dans la demande internationale WO 02/089052.

Bien entendu, le dispositif électronique 10 peut être incorporé dans ou sur l'article de toute autre manière appropriée.

Par exemple, le dispositif 10 peut être porté par une étiquette ou un papier visa collé sur l'article.

Le dispositif 10 peut par exemple être porté par un feuillet 7 du livret.

L'un des feuillets peut être réalisé en papier ou en matière plastique.

Le passeport 1 peut être protégé par une structure de protection 20 comportant des volets avant 21 et arrière 22, chacun pouvant être mis en place sur un volet correspondant 3, 4 du passeport 1, comme illustré sur la figure 2.

Les volets 21 et 22 de la structure de protection 20 sont reliés par une zone de pliage médiane 23 permettant d'accompagner le pliage du passeport 1.

Comme illustré sur la figure 3, le volet 21, respectivement 22, comporte une portion principale 25, respectivement 26, sur laquelle se raccorde un rabat 27, respectivement 28, replié sur la portion principale correspondante 25, respectivement 26.

Les bords inférieur et supérieur 30 de chacun des rabats 27 et 28 peuvent être solidarisés aux portions principales 25 et 26 de manière à permettre l'insertion d'un volet correspondant 3, 4 du passeport 1 entre un rabat 27, 28 et une portion principale 25, 26.

La structure de protection 20 peut être mise en place sur le passeport 1 de manière amovible.

Dans l'exemple illustré sur la figure 2, la structure de protection 20 définit un écran électromagnétique 35 s'étendant sur toute la surface de la structure de protection 20, à savoir sur les portions principales 25 et 26, ainsi que sur les rabats 27 et 28.

La structure de protection 20 comporte par exemple un support en matière plastique transparente, notamment en polyester, ce support étant métallisé afin de former l'écran électromagnétique 35.

La structure de protection 20 peut présenter par exemple un coefficient de transmission de la lumière voisin de 0,8, en lumière du jour.

Les portions principales 25 et 26 des volets 21 et 22 de la structure 20 sont sensiblement transparentes de manière à ce que des informations 9 figurant sur des faces extérieures 28 de la couverture 2 du passeport 1 soient visibles à travers ces portions 25 et 26.

En variante, l'écran électromagnétique 35 peut être formé par l'un des éléments suivants :
- un support, notamment un film, en matière plastique laminé ou contrecollé avec au moins un film métallique, par exemple un film en aluminium ou en cuivre, formant l'écran électromagnétique,
- un support métallisé, notamment par métallisation sous vide ou par traitement chimique, le support pouvant être choisi parmi : un film en matière plastique, un papier, un textile, un non-tissé,
- un support, notamment en papier ou en matière plastique chargé avec une charge électriquement conductrice telle que du noir de carbone ou des fibres de carbone, des fibres métalliques, des fibres métallisées, des paillettes métalliques, une poudre métallique, ou avec un agent conducteur tel que le sel,
- un support à fils entrecroisés, notamment un tissé, un tricot, une grille, une partie au moins des fils étant en matériau électriquement conducteur, étant par exemple en métal,
- un support non-tissé comportant des fibres conductrices, par exemple des fibres métalliques, éventuellement mélangées à des fibres synthétiques,
- un support, notamment un film, présentant une structure ajourée en métal,
- un film métallique,
- un vernis ou une peinture électriquement conducteur, étant par exemple à base de cuivre, de nickel ou d'argent,
- un polymère électriquement conducteur tel que le polypyrrole, le polyacéthylène et le polythiophène,
- un adhésif électriquement conducteur.

L'écran électromagnétique 35 peut également être formé par l'un au moins des éléments suivants :
- un support, notamment un film, en matière plastique laminé ou contrecollé avec au moins un film magnétique,
- un support avec un revêtement magnétique, déposé par exemple sous vide ou par traitement chimique,
- un support, notamment en papier ou en matière plastique, chargé avec une charge magnétique telle que des ferrites,
- un support, notamment un film, présentant une structure ajourée en matériau magnétique,
- un film magnétique,
- un vernis ou une peinture magnétique,
- un adhésif comportant des particules magnétiques.

Comme on peut le constater, lorsque le passeport 1 est fermé, le dispositif électronique 10 est protégé de part et d'autre par les volets 21 et 22 de la structure de protection, s'opposant ainsi à une lecture et/ou écriture sans contact sur le dispositif 10 avec un dispositif extérieur.

La structure de protection 20 est séparée du passeport 1 en vue de permettre la lecture et/ou écriture de données sur le dispositif électronique 10.

Après cette opération de lecture et/ou écriture, la structure de protection 20 est remise en place sur le passeport 1.

Dans l'exemple illustré à la figure 4, l'écran électromagnétique 35 s'étend sur seulement une moitié de la structure de protection 20, à savoir sur le volet arrière 22 par exemple.

Ainsi, il n'est pas nécessaire de séparer la structure de protection 20 du passeport 1 en vue d'une lecture et/ou écriture sur le dispositif électronique 10.

Il suffit, à cet effet, d'ouvrir le passeport 1 afin d'éloigner suffisamment le dispositif électronique 10 du volet arrière 22 de la structure de protection 20, afin que l'écran électromagnétique 35 ne perturbe pas un couplage électromagnétique du dispositif 10 avec un dispositif extérieur.

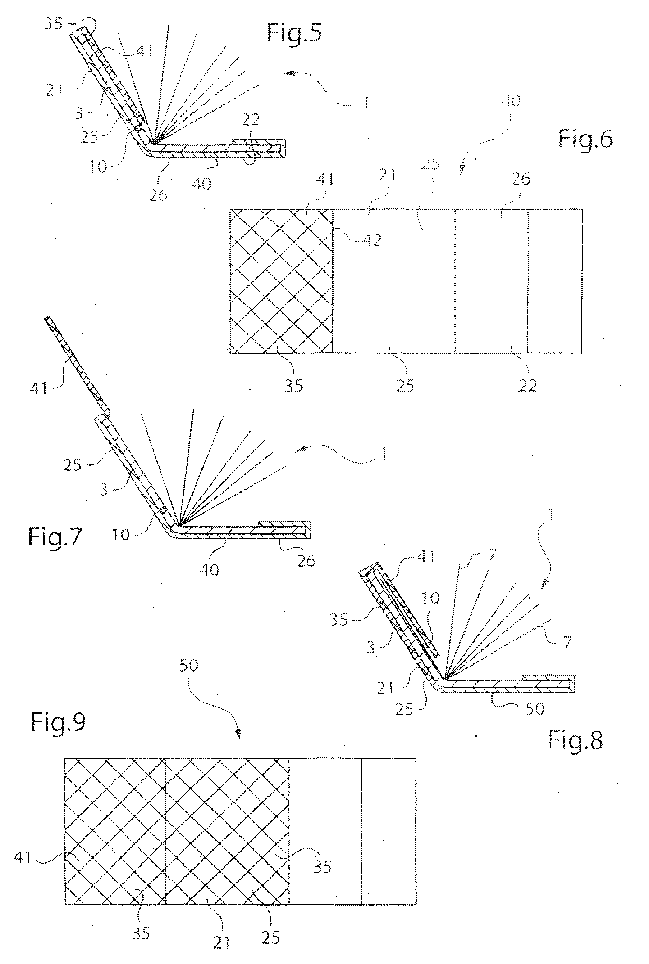

On a représenté sur la figure 5 une structure de protection 40 conforme à un autre exemple de mise en oeuvre de l'invention, mise en place de manière amovible sur le passeport 1.

Cette structure de protection 40 diffère de la structure 20 précédemment décrite par le fait que le volet avant 21 de la structure de protection 40 comporte un rabat 41 relié à la portion principale 25 du volet 21 uniquement par l'intermédiaire d'une zone de pliage 42 permettant de plier et déplier ce rabat 41.

L'écran électromagnétique 35 est réalisé sur ce rabat 41 uniquement, comme illustré sur la figure 6.

Ainsi, lorsque la structure de protection 40 est mise en place sur le passeport 1, le rabat 41 peut s'appliquer contre le volet 3 de la couverture 2 du passeport 1, ce qui empêche le couplage électromagnétique du dispositif 10 porté par le volet 3 avec un dispositif extérieur.

Comme illustré sur la figure 7, pour permettre la lecture des données du dispositif électronique 10, le rabat 41 est déplié afin de l'éloigner du dispositif 10, sans pour autant séparer complètement la structure de protection 40 du passeport 1.

Le rabat 41, lequel n'est pas apparent lorsqu'inséré au sein du passeport fermé, peut, si on le souhaite, être sensiblement opaque, permettant de pouvoir sélectionner des matériaux électriquement conducteurs sensiblement opaques pour réaliser l'écran électromagnétique 35.

Dans l'exemple considéré, le rabat 41 comporte un support formé d'un film, notamment en polyester, laminé avec film en aluminium présentant par exemple une épaisseur d'environ 25 µm.

Sur les figures 2 à 7, le dispositif électronique 10 est incorporé dans le volet avant 3 à proximité de la zone de pliage médiane 23. On ne sort pas du cadre de l'invention lorsque le dispositif électronique 10 est incorporé sur le volet avant 3 de façon à être situé entre le volet avant 21 de la structure de protection et le rabat correspondant.

Dans l'exemple illustré aux figures 8 à 10, le dispositif électronique 10 est porté par un feuillet 7 du passeport 1.

Ce passeport 1 est protégé par une structure de protection 50 sensiblement analogue à la structure de protection 40 précédemment décrite et se différenciant de celle-ci par le fait que la portion principale 25 du volet avant 21 est recouverte par l'écran électromagnétique 35.

Afin de protéger le dispositif 10 contre une lecture et/ou écriture frauduleuse, le feuillet 7 portant le dispositif électronique 10 est inséré sous le rabat 41, contre le volet 3 du passeport, comme illustré sur la figure 8.

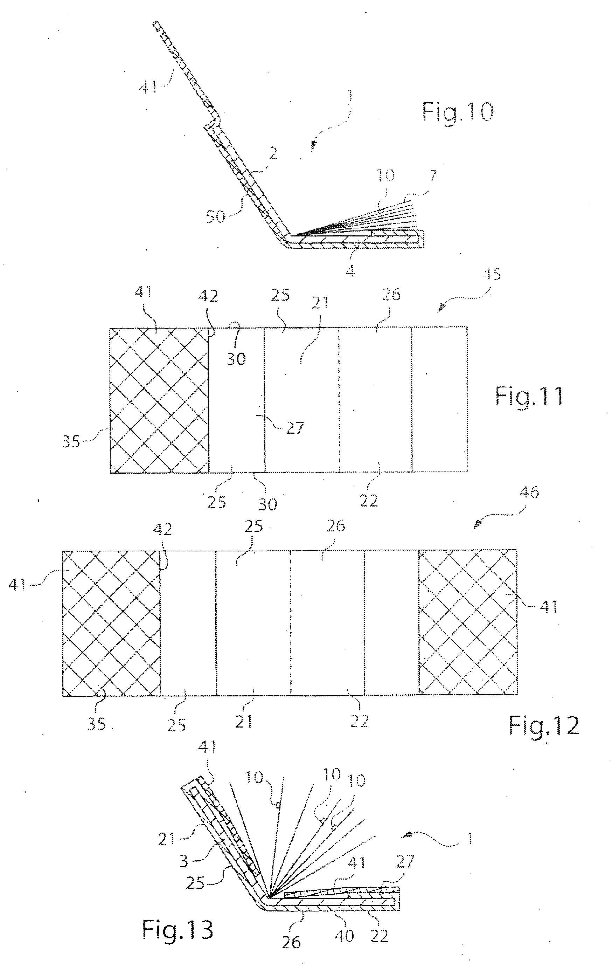

Afin de permettre la lecture et/ou écriture de données sur le dispositif 10, le rabat 41 est déplié et le feuillet 7 portant le dispositif 10 est rabattu du côté du volet arrière 4 de la couverture 2 du passeport 1, afin d'éloigner le dispositif 10 de l'écran électromagnétique 35 (voir figure 10).

On a représenté sur la figure 11 une structure de protection 45 sensiblement analogue à la structure 40 précédemment décrite et se différenciant de celle-ci par le fait que le volet 21 comporte, en plus du rabat dépliable 41, un rabat de maintien 27 solidarisé avec la portion principale 25 du volet 21 *via* ses bords inférieur et supérieur 30.

On a représenté sur la figure 12 un autre exemple de structure de protection 46 sensiblement analogue à la structure 45 et comportant en outre, sur le volet 22, un deuxième rabat dépliable 41.

La structure 46 peut être utilisée pour la protection d'un livret comportant par exemple une pluralité de dispositifs électroniques 10 portés par différents feuillets du livret, comme illustré sur la figure 13. Ces dispositifs 10 sont pris en sandwich entre les rabats 41 lorsque le livret est fermé, permettant de protéger ces dispositifs contre une tentative frauduleuse de lecture et/ou écriture.

On va maintenant décrire des exemples de structures de protection adaptées pour des articles comportant au moins trois volets.

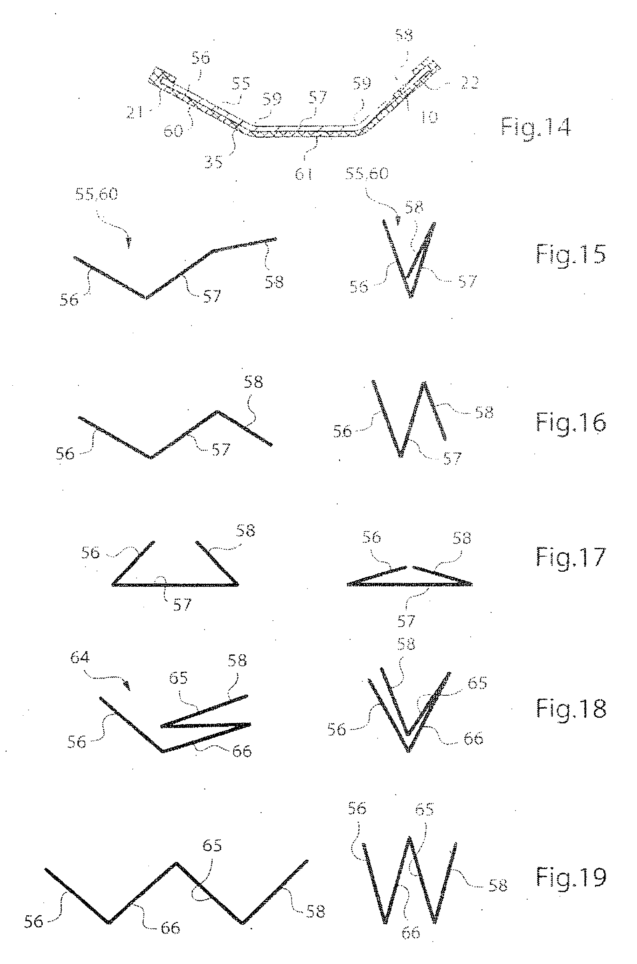

On a représenté sur la figure 14 un article 55 comportant trois volets 56, 57 et 58, les volets extérieurs 56 et 58 étant reliés au volet central 57 par des zones de pliage 59.

L'article 55 est par exemple un permis de conduire, et comporte un dispositif électronique 10 porté par le volet extérieur 58.

Une structure de protection 60 est mise en place de manière amovible sur l'article 55.

La structure de protection 60 est sensiblement analogue à la structure de protection 20 décrite ci-dessus et se différenciant de celle-ci par le fait que la structure de protection 60 comporte un volet central 61 supplémentaire reliant des volets extérieurs 21 et 22.

L'écran électromagnétique 35 s'étend uniquement sur les volets 21 et 61.

La figure 15 illustre l'ensemble de l'article 55 et de la structure de protection 60 à l'état déplié (à gauche) et à l'état plié (à droite).

Lorsque l'article 55 est déplié, le dispositif électronique 10 est suffisamment éloigné de l'écran électromagnétique 35, ce qui permet une lecture et/ou écriture sur le dispositif électronique 10.

A l'état plié, le volet 58 est pris en sandwich entre les volets 56 et 57 de sorte que l'écran électromagnétique 35 de la structure de protection 60 empêche un couplage électromagnétique avec le dispositif 10.

Les volets 56, 57 et 58 de l'article 55 peuvent être pliés de différentes manières.

Comme illustré sur la figure 16, les volets 56, 57 et 58 peuvent être agencés pour pouvoir être pliés en accordéon. Dans ce cas, le dispositif électronique 10 est avantageusement disposé sur le volet central 57.

Dans l'exemple illustré à la figure 17, les volets extérieurs 56 et 58 sont agencés pour pouvoir être rabattus sur le volet central 57.

Dans cet exemple, le dispositif électronique 10 peut être disposé par exemple sur le volet central 57 et l'écran électromagnétique 35 recouvrir les volets extérieurs 56 et 58.

On a présenté sur les figures 18 et 19 un article 64 comportant quatre volets.

Dans l'exemple illustré à la figure 18, l'article 64 comporte, outre les volets extérieurs 56 et 58, deux volets centraux 65 et 66, les volets extérieurs 56 et 58, respectivement les volets centraux 65 et 66 pouvant être rabattus l'un contre l'autre.

Dans l'exemple illustré à la figure 19, les volets 56, 58, 65 et 66 sont agencés de manière à pouvoir être pliés suivant une configuration en W.

Dans les exemples qui viennent d'être décrits, la structure de protection est mise en place de manière amovible sur l'article, à l'aide d'éléments de maintien formés chacun d'une portion principale et d'un rabat d'un volet de la structure de protection.

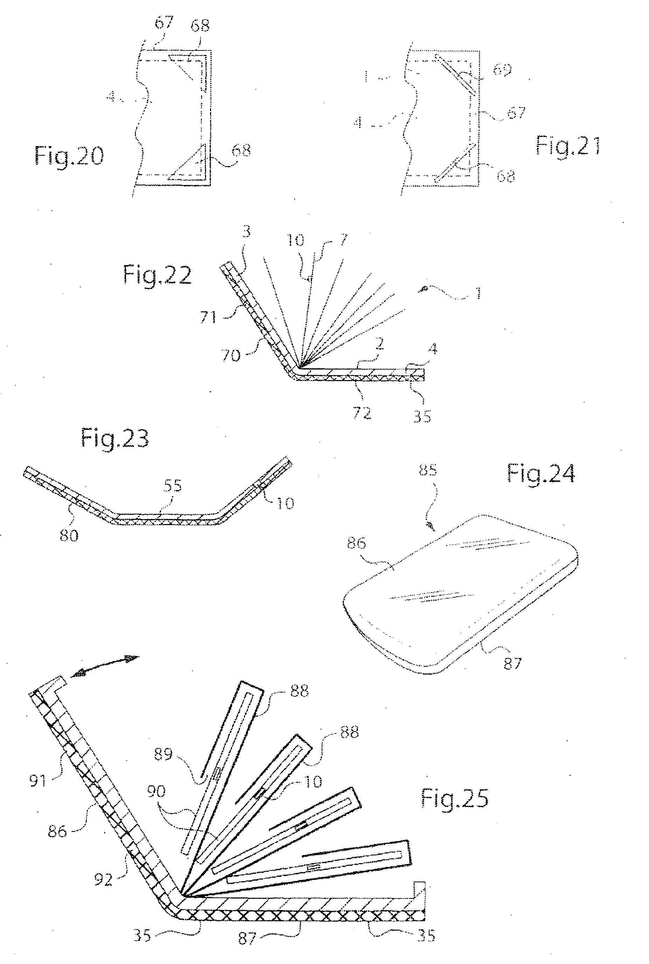

On a illustré sur la figure 20 une structure de protection 67 comportant des éléments de maintien 68 formés chacun par un élément triangulaire définissant une fente permettant l'insertion d'un coin d'un volet 4 de la couverture de livret.

On a illustré sur la figure 21 des éléments de maintien de la structure de protection sur l'article, comportant des organes élastiques 69 rapportés sur les volets de la structure et permettant de maintenir les coins du volet 4 de la couverture du livret contre un volet de la structure de protection 67.

On ne sort pas du cadre de la présente invention lorsque la structure de protection est fixée à demeure sur l'article à protéger.

On a représenté sur la figure 22 une structure de protection 70 comportant deux volets 71 et 72 fixés à demeure sur les volets 3 et 4 de la couverture 2 du passeport 1.

La fixation de la structure de protection 70 sur les volets 3 et 4 peut être réalisée par exemple par laminage, notamment avec application de pression et/ou de chaleur.

En variante, la structure de protection 70 peut être fixée à la couverture de livret 2 par collage, la structure 70 pouvant comporter une couche d'adhésif, par exemple sensible à la pression.

L'écran électromagnétique 35 s'étend sur toute la surface de la structure de protection 70, laquelle est sensiblement transparente afin de laisser des informations de la couverture 2 visibles à travers cette structure de protection 70.

Dans l'exemple illustré, le dispositif électronique 10 est porté par un feuillet 7 du passeport 1.

Lorsque le passeport 1 est fermé, l'écran électromagnétique 35 protège le dispositif électronique 10 contre une tentative de lecture et/ou écriture.

Lorsque le passeport 1 est ouvert, la page 7 portant le dispositif électronique 10 peut être éloigné des volets 3 et 4 de manière à permettre un couplage électromagnétique du dispositif électronique 10 avec un dispositif extérieur.

On a représenté sur la figure 23 une structure de protection 80 analogue à la structure de protection 60 décrite ci-dessus, à la différence que la structure 80 est fixée à demeure sur l'article 55, par exemple par laminage ou par collage.

On a représenté sur la figure 24 un étui 85 comportant des volets extérieurs 86 et 87, notamment sensiblement rigides.

L'étui 85 comporte, entre les volets 86 et 87, une pluralité de pochettes 88 définissant chacune un compartiment 89 destiné à recevoir une carte à puce 90, comme illustré sur la figure 25.

Dans l'exemple considéré, une structure de protection 92 est fixée sur la face extérieure 91 des volets 86 et 87, par exemple par collage.

La structure de protection 92 forme un écran électromagnétique 35 s'étendant sur les volets 86 et 87 de l'étui 85.

Ainsi, lorsque l'étui 85 est fermé, l'écran électromagnétique 35 empêche tout couplage électromagnétique de l'un des dispositifs électroniques 10 avec un dispositif extérieur.

La structure de protection 92 est sensiblement transparente, étant réalisée par exemple en polyester métallisé, permettant, le cas échéant, de préserver la visibilité d'informations ou décorations présents sur une face extérieure de l'étui 85, à travers la structure de protection 92.

La structure de protection 92 permet notamment de protéger la face extérieure 91 de l'étui 85.

L'étui 85 peut former par exemple un portefeuille ou un bagage tel qu'une mallette.

Bien entendu, l'invention n'est pas limitée aux exemples de mise en oeuvre qui viennent d'être décrits.

L'expression « comportant un » doit être comprise comme étant synonyme de « comportant au moins un », sauf si le contraire est spécifié.

## Revendications

1. Structure de protection (20 ; 40 ; 45 ; 46 ; 50 60 ; 67) pour un article (1 ; 55) tel qu'un document, l'article comportant :
- au moins deux volets (3, 4 ; 56; 57, 58) reliés par une zone de pliage (5 ; 59),
- au moins un dispositif électronique (10) permettant d'échanger des données sans contact, ou au moins un compartiment (89) agencé pour recevoir au moins un élément (90) comportant un tel dispositif électronique,
la structure de protection comportant :
- au moins une zone de pliage (23) permettant à la structure d'accompagner le pliage de l'article,
- au moins un écran électromagnétique (35), comportant au moins une portion sensiblement transparente de manière à ce que des informations figurant sur l'article soient visibles à travers cette portion sensiblement transparente de la structure de protection,
- au moins un élément de maintien agencé pour retenir l'article sur la structure de protection de manière amovible,
la structure étant agencée pour pouvoir prendre au moins une configuration dans laquelle la structure est mise en place sur l'article et l'écran électromagnétique s'oppose à une lecture et/ou écriture sans contact du dispositif électronique.

2. Structure selon la revendication précédente, agencée pour recouvrir au moins partiellement une face extérieure (8) de l'article lorsque la structure de protection est mise en place sur l'article.

3. Structure selon la revendication précédente, comportant deux volets (21, 22 ; 61) reliés par ladite zone de pliage (23).

4. Structure selon la revendication précédente, l'un au moins des volets de la structure de protection comportant au moins une portion principale (25 ; 26) et un rabat (27 ; 28 ; 41) pour former l'élément de maintien permettant l'insertion d'une portion au moins d'un volet (3 ; 4) de l'article entre ladite portion principale et ledit rabat.

5. Structure selon la revendication précédente, le rabat (27 ; 28) comportant au moins deux bords (30) opposés, notamment sensiblement parallèles, fixés à la portion principale (25 ; 26) du volet.

6. Structure selon la revendication précédente, ledit rabat (41) étant relié à ladite portion principale (25) du volet de manière à permettre le pliage et le dépliage du rabat par rapport à la portion principale.

7. Structure selon l'une quelconque des revendications 1 à 6, l'écran électromagnétique (35) s'étendant sur une portion seulement de la surface de la structure de protection.

8. Structure selon la revendication précédente, comportant au moins un volet ayant une portion principale destinée à recouvrir au moins partiellement une face extérieure (8) du volet correspondant de l'article, l'écran électromagnétique (35) s'étendant au moins sur cette portion principale de la structure de protection, notamment seulement sur cette portion principale.

9. Structure selon l'une des quelconque des revendications 4 à 6 et selon la revendication 7, l'écran électromagnétique (35) s'étendant sur au moins ledit rabat (41), notamment seulement sur ce rabat.

10. Structure selon la revendication précédente, comportant deux rabats dépliables (41) reliés chacun à une portion principale des deux volets de la structure de protection (46).

11. Structure selon l'une quelconque des revendications 4 à 6 et selon la revendication 10, l'écran électromagnétique (35) s'étendant à la fois sur ladite portion principale et ledit rabat du volet.

12. Ensemble comportant :
- un article, notamment un document,
- une structure de protection définie dans l'une quelconque des revendications précédentes, mise en place de manière amovible sur ledit article.

13. Procédé pour protéger un article, notamment un document, d'un ensemble selon la revendication 12, contre une tentative de lecture et/ou écriture sans contact du dispositif électronique, le procédé comportant l'étape suivante :
- mettre en place de manière amovible la structure de protection sur l'article.

## Claims

1. A protective structure (20; 40; 45; 46; 50; 60; 67) for an article (1; 55) such as a document, the article comprising:
- at least two panels (3, 4; 56, 57, 58) connected together by a fold zone (5; 59); and
- at least one electronic device (10) enabling data to be exchanged without contact, or at least one compartment (89) arranged to receive at least one element (90) including such an electronic device;
the protective structure comprising:
- at least one fold zone (23) enabling the structure to accompany folding of the article;
- at least one electromagnetic screen (35) including at least one portion that is substantially transparent so that information that appears on the article can be seen through said substantially transparent portion of the protective structure; and
· at least one holding element arranged to hold the article on the protective structure in releasable manner;
the structure being arranged to be capable of taking at least one configuration in which the structure is put into place on the article and the electromagnetic screen opposes contactless reading and/or writing of the
electronic device.

2. A structure according to the preceding claim, arranged to cover at least part of an outside face (8) of the article when the protective structure is put into place on the article.

3. A structure according to the preceding claim, having two panels (21, 22; 61) connected together by said fold zone (23).

4. A structure according to the preceding claim, at least one of the panels of the protective structure including at least one main portion (25; 26) and a flap (27; 28; 41) for forming the holding element enabling at least a portion of a panel (3; 4) of the article to be inserted between said main portion and said flap.

5. A structure according to the preceding claim, the flap (27; 28) having at least two opposite edges (30), in particular substantially parallel edges, that are fastened to the main portion (25; 26) of the panel.

6. A structure according to the preceding claim, said flap (41) being connected to said main portion (25) of the panel in such a manner as to enable the flap to be folded towards and away from the main portion.

7. A structure according to any one of claims 1 to 6, the electromagnetic screen (35) extending over a portion only of the surface of the protective structure.

8. A structure according to the preceding claim, including at least one panel having a main portion for covering at least part of an outside face (8) of the corresponding panel of the article, the electromagnetic screen (35) extending over at least said main portion of the protective structure, in particular over said main portion only.

9. A structure according to any one of claims 1 to 6 and to claim 7, the electromagnetic screen (35) extending at least over said panel (41), and in particular over said flap only.

10. A structure according to the preceding claim, having two foldable flaps (41), each connected to a main portion of two panels of the protective structure (46).

11. A structure according to any one of claims 4 to 6 and to claim 10, the electromagnetic screen (35) extending both over said main portion and over said flap of the panel.

12. An assembly comprising:
· an article, in particular a document; and
· a protective structure as defined in any preceding claim put into place removably on said article.

13. A method of protecting an article, in particular a document, in an assembly according to claim 12, against attempts at contactless reading and/or writing from or to the electronic device, the method comprising the following step:
· placing the protective structure removably into place on the article.

## Patentansprüche

1. Schutzstruktur (20; 40; 45; 46; 50; 60; 67) für einen Gegenstand (1; 55), insbesondere ein Dokument, wobei der Gegenstand aufweist:
wenigstens zwei Klappteile (3, 4; 56, 57, 58), die über eine Faltzone (5; 59) miteinander verbunden sind,
wenigstens eine Elektronikvorrichtung (10), die den kontaktlosen Austausch von Daten ermöglicht, oder wenigstens ein Fach (89), das zur Aufnahme wenigstens eines Elements (90) mit einer solchen Elekttonikvorrichtung ausgelegt ist,
wobei die Sicherheitsstruktur ausweist:
wenigstens eine Faltzone (23), die es der Struktur erlaubt, die Faltung des Gegenstands mitzumachen,
wenigstens eine elektromagnetische Abschirmung (35), die wenigstens einen im Wesentlichen transparenten Abschnitt aufweist, so dass auf dem Gegenstand dargestellte Informationen durch diesen im Wesentlichen transparenten Abschnitt der Schutzstruktur hindurch sichtbar sind,
wenigstens ein Halteelement, das dazu ausgelegt ist, den Gegenstand abnehmbar an der Schutzstruktur zu halten,
wobei die Struktur dazu ausgelegt ist, wenigstens eine Konfiguration einnehmen zu können, in der die Struktur an dem Gegenstand angebracht ist und die elektromagnetische Abschirmung ein kontaktloses Lesen und/oder Schreiben der elektronischen Vorrichtung unterbindet.

2. Struktur nach dem vorstehenden Anspruch, die dazu ausgelegt ist, eine Außenseite (8) des Gegenstands wenigstens teilweise zu bedecken, wenn die Schutzstruktur an dem Gegenstand angebracht ist.

3. Struktur nach dem vorstehenden Anspruch, mit zwei Klappteilen (21, 22; 61), die durch die Faltzone (23) miteinander verbunden sind.

4. Struktur nach dem vorstehenden Anspruch, wobei wenigstens eines der Klappteile der Schutzstruktur wenigstens einen Hauptabschnitt (25; 26) und eine Lasche (27; 28; 41) zum Bilden des Halteelements aufweist, um das Einschieben wenigstens eines Abschnitts eines Klappteils (3; 4) des Gegenstands zwischen den Hauptabschnitt und die Lasche zu ermöglichten.

5. Struktur nach dem vorstehenden Anspruch, wobei die Lasche (27; 28) wenigstens zwei Ränder (30) aufweist, die entgegengesetzt, vorzugsweise im Wesentlichen parallel, sind und die an dem Hauptabschnitt (25; 26) des Klappteils befestigt sind.

6. Struktur nach dem vorstehenden Anspruch, wobei die Lasche (41) so mit dem Hauptabschnitt (25) des Klappteils verbunden ist, dass das Falten und Enthalten der Lasche mittels des Hauptabschnitts möglich ist.

7. Struktur nach einem der Ansprüche 1 bis 6, wobei sich die elektromagnetische Abschirmung (35) nur über einen Abschnitt der Oberfläche der Schutzstruktur erstreckt.

8. Struktur nach dem vorstehenden Anspruch, mit wenigstens einem Klappteil, das einen Hauptabschnitt zum wenigstens teilweisen Bedecken einer Außenseite (8) des entsprechenden Klappteils des Gegenstands aufweist, wobei sich die elektromagnetische Abschirmung (35) wenigstens über diesen Hauptabschnitt der Schutzstruktur, insbesondere nur über diesen Hauptabschnitt, erstreckt.

9. Struktur nach einem der Ansprüche 4 bis 6 und nach Anspruch 7, wobei sich die elektromagnetische Abschirmung (35) wenigstens über die Lasche (41), insbesondere nur über die Lasche, erstreckt,

10. Struktur nach dem vorstehenden Anspruch, mit zwei entfaltbaren Laschen (41), die jeweils mit einem Hauptabschnitt der zwei Klappteile der Schutzstruktur (46) verbunden sind.

11. Struktur nach einem der Ansprüche 4 bis 6 und nach Anspruch 10, wobei sich die elektromagnetische Abschirmung (35) sowohl über den Hauptabschnitt als auch über die Lasche des Klappteils erstreckt.

12. Zusammenstellung mit:
einem Gegenstand, insbesondere einem Dokument,
einer gemäß einem der vorstehenden Ansprüche definierten Schutzstruktur, die abnehmbar an dem Gegenstand angebracht ist.

13. Verfahren zum Schützen eines Gegenstands, insbesondere eines Dokuments, in einer Zusammenstellung nach Anspruch 12 gegen einen Versuch des kontaktlosen Lesens und/oder Beschreibens der elektronischen Vorrichtung, wobei das Verfahren den folgenden Schritt umfasst:
abnehmbares Anbringen der Schutzstruktur an dem Gegenstand,
